# FASCICULE DE BREVET EUROPEEN

(11) **EP 0 792 206 B1**
(45) Date de publication et mention de la délivrance du brevet: **03.03.1999**
(21) Numéro de dépôt: 95939244.0
(22) Date de dépôt: 08.11.1995
(51) Int. Cl.: B29C 47/02, F16L 1/11

(54) **PROCEDE DE FABRICATION D'UN TUYAU A BASE DE MATIERE PLASTIQUE, FILIERE D'EXTRUSION ET TUYAU**
KUNSTSTOFFROHR, EXTRUSIONSDÜSE UND VERFAHREN ZUR HERSTELLUNG SOLCHE KUNSTSTOFFRÖHREN
METHOD FOR MAKING A PLASTIC PIPE, EXTRUSION DIE AND PIPE

(30) Priorité: 17.11.1994 BE 9401035
(43) Date de publication de la demande: 03.09.1997
(73) Titulaire: POLVA PIPELIFE B.V., 1601 MA Enkhuizen (NL)
(72) Inventeur: DE BRUILLE, Thierry, B-1330 Rixensart (BE); DUPONT, Serge, B-1800 Vilvoorde (BE)
(74) Mandataire: de Bruijn, Leendert C.
(86) Numéro de dépôt international: EP9504403
(87) Numéro de publication internationale: WO9615894

(56) Documents cités:
- EP-A- 0 159 307
- DE-A- 2 248 441
- FR-A- 2 579 926
- GB-A- 2 190 458
- US-A- 4 277 432

## Description

La présente invention concerne un précédé de fabrication d'un tuyau à base de matière plastique, et plus précisément d'un tuyau comportant au sein de sa paroi un ou plusieurs fils métalliques continus permettant notamment d'en faciliter la détection après son enfouissement dans le sol.

L'invention s'étend également à la filière pour la mise en oeuvre du procédé et à des tuyaux extrudés comportant un ou plusieurs fils continus disposés avec précision au sein de leur paroi.

De tels tuyaux sont notamment destinés à être utilisés comme conduits de protection pour câbles de télécommunication, mais peuvent également être utilisés, plus classiquement, pour véhiculer des fluides. Leur détection est destinée notamment à éviter d'endommager les tuyaux enterrés lors de modifications ou de réparations du réseau, ou encore lorsque des travaux de terrassement ou de voirie sont exécutés à leur proximité.

La présence d'un fil métallique peut encore servir à localiser une éventuelle rupture d'un tuyau. Cette localisation peut notamment s'effectuer en reliant le fil métallique à un générateur à haute fréquence : le fil joue alors le rôle d'une antenne et il est possible, au moyen d'un récepteur portatif, de suivre le trajet du tuyau jusqu'à l'endroit de la rupture, au-delà duquel plus aucun signal n'est détecté. A cette fin, il est évidemment nécessaire d'assurer l'interconnexion des fils des différents tronçons de tuyau, au cas où plusieurs d'entre eux sont raccordés les uns aux autres.

Dans le document BE-A-717067, on décrit des tuyaux flexibles munis de conducteurs servant à éviter ou à réduire le risque de formation de charges d'électricité statique dans les tuyaux. Selon ce document, un tuyau flexible comporte un ruban conducteur qui est appliqué sur la paroi intérieure ou extérieure du tuyau pendant son extrusion.

Dans le document EP-A-0159307, on décrit une technique consistant à incorporer un fil ou une bande métallique dans la paroi d'un tuyau en utilisant une filière d'extrusion pourvue, à sa sortie, c'est-à-dire dans une zone où la matière plastique n'est pratiquement plus sous pression et est déjà partiellement solidifiée, d'un canal oblique par lequel est introduit un fil métallique, préalablement chauffé.

Le fil est entraîné à la vitesse adéquate à l'aide de rouleaux et éventuellement de contre-rouleaux d'appui, situés juste avant l'entrée du fil dans la filière d'extrusion.

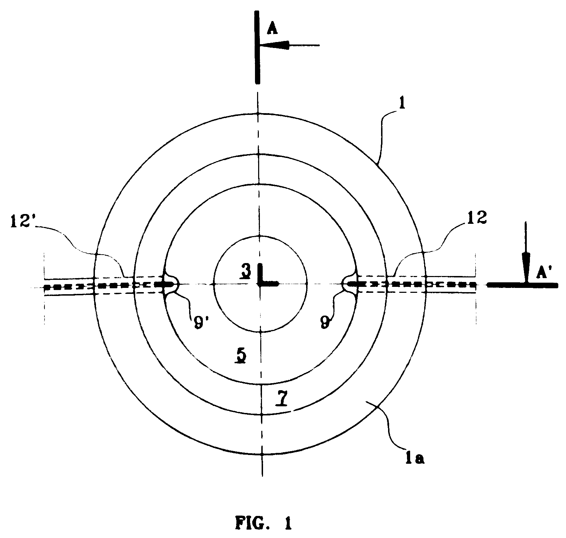

Selon la forme d'exécution décrite à la Figure 1 dudit document, le fil est solidarisé en continu à la paroi extérieure d'un tuyau. Le fil qui a été préalablement chauffé est entraîné par lesdits rouleaux dans un canal rectiligne incliné par rapport à l'axe de la filière d'extrusion d'un angle de l'ordre de 30°, qui débouche à la sortie de la filière.

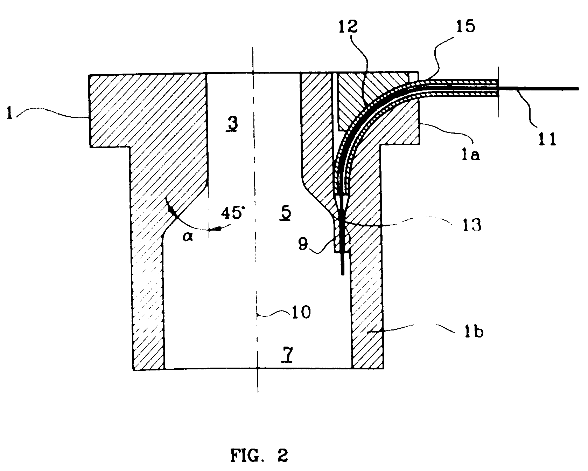

Le fil préchauffé est appliqué sur la paroi du tuyau qui est encore déformable juste avant de quitter la tête de la filière, à partir de sa face extérieure. Le fil conducteur est donc (ainsi que représenté à la Figure 2) incorporé seulement partiellement dans la paroi du tuyau, et affleure généralement à sa surface extérieure. Cette technique rend en outre nécessaire un réglage précis et une synchronisation de la vitesse d'alimentation du fil et de la vitesse d'extrusion du tuyau.

Dans le document EP-A-0449795 on se réfère au document précédent en laissant entendre que cette technique présente des inconvénients, notamment le fait que le fil n'est pas incorporé de manière régulière et fiable dans la paroi, en particulier si l'on ne contrôle pas parfaitement les paramètres opératoires, notamment la température du fil et de la matière constituant la paroi. C'est pour cette raison que ce document propose une autre technique consistant à creuser une gorge dans la paroi d'un tuyau, à y déposer un fil métallique et ensuite à combler ladite gorge par extrusion d'une bandelette. Ceci exige, pour pouvoir travailler dans de bonnes conditions, de pratiquer une gorge assez profonde et donc de réaliser des parois d'une épaisseur relativement importante. De plus, cette technique est onéreuse, lente et constitue une étape non intégrée au processus d'extrusion. En outre, même si elle est ultérieurement comblée, la gorge creusée dans la paroi du tuyau amoindrit la résistance mécanique de celui-ci, par effet d'entaille. Par ailleurs, le comblement de la gorge par extrusion d'une bandelette crée généralement à la surface du tuyau une irrégularité géométrique qui peut nuire à l'étanchéité en cas de raccordement. Enfin, cette technique ne garantit pas un positionnement précis du fil au sein de la paroi du tuyau. La précision de ce positionnement est cependant généralement souhaitable, en particulier dans la perspective de l'interconnexion des fils de différents tuyaux que l'on raccorde.

Le document FR-A-2579926 décrit une technique permettant d'extruder des profilés fermés ou ouverts, destinés en particulier à être utilisés dans la construction de bâtiments, auxquels sont incorporés un ou plusieurs éléments renforçateurs destinés à les renforcer mécaniquement, tels que des feuillards ou des fils métalliques, des fibres synthétiques ou autres, etc. Les tuyaux ne sont pas mentionnés. La filière utilisée en vue de fabriquer ces profilés comporte un tronçon divergent, suivi d'un court tronçon convergent, ainsi que des guides acheminant les éléments renforçateurs, qui débouchent dans la filière à un endroit éloigné de l'extrémité la plus large du tronçon divergent et proche de la sortie de la filière.

Le document DE-A-2248441 décrit différents types de tuyaux dont la paroi contient un fil métallique. Toutefois, aucun détail n'est donné quant au procédé et/ou au dispositif utilisés pour fabriquer ces tuyaux.

Le document US-A-4277432 concerne la fabrication de cathéters dont la localisation est facilitée par l'insertion d'un fil souple opaque aux rayons X. Ce fil est constitué d'un matériau élastomérique réticulable ; on le réticule, ou on achève de le réticuler, après son extrusion au sein du cathéter proprement dit. Pour fabriquer ce cathéter, on utilise une filière convergente.

La présente invention vise à fournir une technique et en particulier un procédé et un dispositif permettant de manière simple et fiable d'incorporer un ou plusieurs fils métalliques continus dans la paroi de tuyaux à base de matière plastique, en obviant aux inconvénients des solutions proposées dans l'état de la technique.

L'invention vise en particulier à permettre une incorporation complète et régulière du fil dans la paroi du tuyau, en particulier en évitant qu'il n'affleure à la surface de cette paroi (auquel cas il risque de se détériorer soit lors de sa pose par effet mécanique, soit après sa pose par effet de corrosion) et en évitant qu'il ne doive être situé à une profondeur trop importante dans la paroi du tube, ce qui peut réduire sa résistance mécanique.

Le choix approprié des conditions opératoires d'extrusion, et en particulier l'utilisation d'une filière spécifique, permet d'incorporer simplement et avec précision un ou plusieurs fils métalliques au sein de la paroi de tuyaux du type mentionné.

De manière plus précise, l'invention concerne un procédé de et une filière pour la fabrication d'un profilé à base de matière plastique comportant dans sa paroi au moins un fil métallique continu tel que définis dans les revendications 1 et 6.

Le procédé est applicable en principe à toute matière plastique habituellement utilisée pour la fabrication de tuyaux. Par matière plastique, on entend désigner tout polymère thermodurcissable ou thermoplastique, ou tout mélange de tels polymères, comprenant éventuellement en outre des additifs conventionnels tels qu'adjuvants de mise en oeuvre, antioxydants, lubrifiants, anti-UV, pigments, matières de charge, fibres de renforcement, etc. On préfère utiliser un ou plusieurs polymères thermoplastiques, tels que par exemple des polymères du chlorure du vinyle ou d'alpha-oléfines. Parmi les polymères d'alpha-oléfines, on préfère utiliser le polyéthylène (PE). On préfère tout particulièrement utiliser du PE de haute densité (PEHD).

Le procédé peut être utilisé pour fabriquer des tuyaux souples ou rigides. Dans le cas de tuyaux destinés à servir de conduits de protection, il est préférable que ces tuyaux soient rigides, ou mieux encore qu'ils présentent une rigidité annulaire initiale d'au moins 8 kN/m², tout en résistant à une pression d'au moins 10 bars. La rigidité annulaire initiale est définie comme valant E / (12.(SDR - 1)³), où E désigne le module d'élasticité de la matière utilisée et SDR le rapport diamètre extérieur / épaisseur du tuyau (norme ISO 9969).

Le fil métallique utilisé peut être essentiellement constitué d'un métal ou alliage métallique quelconque, par exemple à base de cuivre. Par "fil continu", on entend indiquer que sa longueur est élevée, par exemple de plusieurs dizaines ou centaines de mètres ; généralement, le fil a la même longueur que le tuyau auquel il est incorporé.

La filière dont il est question présente la plupart des caractéristiques des filières classiquement utilisées pour l'extrusion de tuyaux. Il s'agit d'un dispositif que l'on place généralement dans l'axe de la sortie d'une extrudeuse, comprenant une cavité intérieure le traversant de part en part selon cet axe, un noyau étant également disposé selon cet axe dans cette cavité intérieure, de manière à définir un espace intérieur par où puisse s'écouler la matière plastique en fusion provenant de l'extrudeuse.

L'espace intérieur de la filière comporte plusieurs tronçons. Chacun d'entre eux présente des sections transversales qui sont topologiquement équivalentes à un anneau, de manière à permettre l'extrusion de tuyaux creux. Ces sections transversales peuvent notamment être annulaires, avoir la forme d'ellipses épaissies ou celle de carrés épaissis, selon que l'on désire respectivement fabriquer des tuyaux de section circulaire, elliptique ou carrée. Ces exemples ne sont pas limitatifs.

De manière correspondante, le tronçon divergent a de préférence une forme générale approximativement tronconique dans le cas de l'extrusion de tuyaux de section circulaire, la forme d'une pyramide tronquée dans le cas de l'extrusion de tuyaux de section polygonale, etc. Il n'est cependant pas indispensable que la forme de la section transversale du tronçon divergent soit identique à celle du tronçon de géométrie constante qui le suit, qui détermine essentiellement la section du tuyau obtenu.

Par "tronçon de géométrie constante", on désigne une zone de l'espace intérieur de la filière dont la section transversale est sensiblement identique sur toute la longueur. Dans certains cas, on prévoit cependant une légère diminution de l'épaisseur de cette zone (entrefer), d'une valeur modérée toutefois, afin d'éviter que le fil ne vienne affleurer à la surface intérieure du tuyau. Dans le cas, le plus courant, de filières destinées à l'extrusion de tuyaux de section circulaire, la section transversale de ce tronçon a une forme annulaire. Ce tronçon de géométrie constante a de préférence une longueur suffisante, de sorte que l'écoulement de la matière plastique en cours d'extrusion devienne pratiquement stable en un endroit situé avant l'extrémité de sortie de la filière.

Le canal latéral débouche dans l'espace intérieur de la filière à proximité de l'extrémité la plus large du tronçon divergent, c'est-à-dire à proximité de l'endroit où la géométrie de l'espace intérieur de la filière devient sensiblement constante. Ceci permet de réduire au minimum les perturbations de l'écoulement de matière plastique, qui se stabilise progressivement au fur et à mesure de sa progression dans le tronçon de géométrie constante, et évite notamment de créer des hétérogénéités qui pourraient réduire localement la résistance mécanique du tuyau.

De manière avantageuse la section transversale de l'espace intérieur de la filière, c'est-à-dire la superficie dont dispose la matière plastique fondue pour s'écouler, reste approximativement constante tout au long de la filière.

On peut utiliser un ou plusieurs fils. Avantageusement, pour des raisons de sécurité, on prévoit au moins deux fils métalliques par tuyau. Ceci est aisément réalisable selon l'invention, grâce à un procédé tel que défini ci-dessus dans lequel au moins deux fils métalliques sont amenés par des canaux latéraux individuels débouchant dans l'espace intérieur de la filière. Généralement, un seul fil métallique est introduit par chaque canal latéral.

Dans la suite de la présente description, les références à un canal et à un fil se comprendront comme désignant, le cas échéant, chacun des canaux et des fils, le singulier n'étant utilisé que pour des raisons de commodité.

Le canal latéral d'introduction du fil est avantageusement configuré de manière à déboucher dans l'espace intérieur de la filière sensiblement parallèlement à l'axe de la filière. On assure ainsi un positionnement précis du fil au sein de la paroi du tuyau, au contraire des variantes dans lesquelles le fil est introduit obliquement, dans lesquelles sa position exacte au sein de la paroi dépend surtout d'autres facteurs tels que sa rigidité ou la viscosité de la matière plastique fondue.

Le fil métallique est avantageusement introduit dans l'espace intérieur de la filière par un canal latéral curviligne.

Le fil métallique peut avoir été préalabiement chauffé. Cette opération n'est cependant pas indispensable, car le procédé de l'invention ne consiste pas à enfoncer extérieurement un fil métallique dans la paroi déjà partiellement solidifiée d'un tuyau mais, au contraire, consiste plutôt à "injecter" le fil à l'emplacement voulu au sein de la paroi du tuyau en cours d'extrusion.

Lors du démarrage, le fil peut être entraîné directement par la matière après une simple poussée manuelle, ce qui évite le recours à des systèmes d'entraînement et élimine tout problème de synchronisation. En outre, l'amorçage est aisé et le fil est ensuite simplement entraîné à mesure de l'extrusion du tuyau. Afin d'assurer une tension adéquate dans le fil, la bobine sur laquelle celui-ci est enroulé est avantageusement pourvue d'un dispositif de freinage.

La technique permet la réalisation de différents types de tuyaux. Elle peut être combinée avec l'utilisation d'un feedblock de coextrusion permettant le recyclage de matière ou la réalisation de couches de différentes couleurs, voire même de réaliser une ou plusieurs bandes de couleur différente, pouvant servir à repérer les conducteurs en cuivre. Elle peut encore être combinée avec l'utilisation d'un dispositif pour la réalisation, sur la surface intérieure du tuyau, de nervures destinées à réduire le frottement du ou des câbles que l'on souhaite y insérer. En particulier, des nervures ayant la forme de tronçons hélicoïdaux de sens de rotation alternés peuvent être réalisées en disposant à l'extrémité du noyau une roue rainurée mue d'un mouvement de rotation alternatif.

L'étape d'extrusion décrite ci-dessus peut éventuellement être suivie d'autres étapes connues en soi, par exemple d'une étape de calibrage et/ou de marquage et/ou d'enroulement, etc. Lorsque le tuyau doit être enroulé sur une bobine, on tente de préférence de faire en sorte que le ou les fils métalliques incorporés au sein de sa paroi ne subissent pas de contraintes excessives. En particulier, dans le cas de tuyaux comportant un seul fil ou 2 fils diamétralement opposés, il est souhaitable que le diamètre du tuyau passant par l(es) axe(s) de ce(s) fil(s) soit parallèle à l'axe de la bobine.

Il est encore possible, classiquement, d'accroître la résistance à la pression des tuyaux ainsi obtenus en enroulant hélicoïdalement à leur surface une ou plusieurs bandes de renforcement, constituées par exemple de fibres de verre continues enrobées d'une matière thermoplastique.

Par le procédé de l'invention, il devient possible de réaliser de manière simple des tuyaux à base de matière plastique comportant au sein de leur paroi un ou plusieurs fils métalliques destinés notamment à en faciliter la détection après leur enfouissement dans le sol, présentant la caractéristique que lesdits fils sont disposés de manière régulière au sein de la paroi du tuyau à une profondeur de l'ordre de 0,5 à 1 mm.

De plus amples détails relatifs à la filière utilisée dans le procédé de l'invention sont donnés ci-dessous.

Ainsi qu'il a été indiqué, l'invention porte également sur une filière d'extrusion adaptée pour la mise en oeuvre du procédé.

De manière plus précise, l'invention concerne également une filière pour l'extrusion de tuyaux à base de matière plastique, comportant un tronçon divergent et un tronçon de géométrie constante, consécutif au précédent et disposé dans l'axe de celui-ci, qui se caractérise en ce qu'elle comprend en outre au moins un canal latéral d'introduction d'un fil métallique dans l'espace intérieur de la filière, y débouchant à proximité de l'extrémité la plus large du tronçon divergent.

Ces caractéristiques de la filière sont détaillées ci-dessus.

Selon une variante préférée, le tronçon divergent comprend essentiellement une zone dont l'angle de demi-ouverture par rapport à l'axe de la filière est supérieur à 35°, de préférence supérieur à 40°, et inférieur à 55°, de préférence inférieur à 50°. Selon une variante avantageuse, ledit tronçon divergent se raccorde aux tronçons adjacents de manière progressive, sans arêtes vives. Le tronçon divergent peut notamment présenter une forme tronconique.

Si l'on souhaite fabriquer des tuyaux comportant plus d'un fil métallique au sein de leur paroi, on utilisera une filière comprenant au moins deux canaux latéraux individuels pour l'introduction d'au moins deux fils métalliques.

Afin d'assurer un positionnement extrêmement précis du fil métallique au sein de la paroi du tuyau, il est préférable de faire en sorte qu'il suive autant que possible les lignes de flux de l'écoulement de la matière plastique, et en traverse le moins possible. C'est pourquoi, selon une variante préférée, le canal latéral débouche dans un ressaut de la surface extérieure de l'espace intérieur de la filière, disposé de manière à ne pas perturber de manière importante le flux de matière plastique dans la filière. On réduit ainsi d'une part les perturbations de l'écoulement de la matière plastique, qui peuvent, après solidification, affecter localement la résistance mécanique des tuyaux, et d'autre part la résistance que doit vaincre le fil métallique dans sa traversée des lignes de flux en direction de sa position définitive, dont les variations peuvent affecter la précision de ce positionnement.

Pour des raisons analogues, on préfère par ailleurs que le canal latéral débouche dans l'espace intérieur de la filière sensiblement parallèlement à son axe.

De même, il est avantageux que le canal latéral débouche au moins à une profondeur de 0,5 mm, et de préférence d'au moins 1 mm, par rapport à la surface extérieure du tronçon de géométrie constante. En effet, la traction à laquelle sont généralement soumis les tuyaux en cours d'extrusion provoque un léger étirage axial, qui peut conduire le ou les fils incorporés au sein de la paroi des tuyaux à se déplacer légèrement en direction de leur surface extérieure ; il est dès lors préférable que le ou les canaux latéraux d'introduction du ou des fils débouchent, par rapport à la surface extérieure des tuyaux, légèrement plus profondément que la position finale souhaitée du ou des fils.

Afin notamment de faciliter le déplacement du fil dans le canal latéral permettant son introduction dans l'espace intérieur de la filière, on préfère que le canal latéral soit curviligne. Pour la même raison, selon une variante avantageuse, le canal latéral est gaîné intérieurement, sur au moins une partie de sa longueur, d'un tube de guidage de faible coefficient de frottement. Ce tube de guidage peut par exemple être essentiellement constitué, ou intérieurement revêtu, d'acier inoxydable.

La présente invention concerne également un tuyau à base de matière plastique, extrudé en une seule pièce, qui se caractérise en ce qu'il comporte au sein de sa paroi au moins un fil métallique continu disposé sensiblement parallèlement à son axe, à une profondeur d'au moins 0,5 mm, par rapport à la surface extérieure du tuyau.

La matière plastique répond à la définition donnée précédemment. Idéalement, la profondeur du fil est d'environ 0,5 à 1 mm. Cette profondeur est particulièrement commode dans la perspective de l'interconnexion des fils en cas de raccordement de tuyaux de ce type.

Un des avantages que présente un tel tuyau par rapport à ceux antérieurement connus est précisément qu'il est fabriqué d'une seule pièce. Ceci signifie que le fil métallique n'y a pas été incorporé par enfoncement après que le tuyau ait été extrudé. En effet, lorsque c'est le cas, la structure interne de la matière plastique est perturbée, ce qui provoque des hétérogénéités pouvant réduire la résistance mécanique du tuyau, et la surface extérieure du tuyau présente également une déformation au droit de l'emplacement du fil, pouvant nuire à l'étanchéité en cas de raccordements. Le tuyau n'a pas non plus subi le creusement puis le comblement d'une gorge dans sa paroi, qui ont également pour conséquence notamment d'affecter ses propriétés mécaniques et d'être visibles par simple observation de la surface extérieure du tuyau.

Une autre façon de caractériser ce tuyau consiste à préciser que sa surface extérieure ne présente, au droit du fil métallique, aucune protubérance de plus de 250 µm, de préférence de plus de 100 µm, ou même de plus de 50 µm, de hauteur.

On notera que le tuyau ainsi défini peut notamment être obtenu en utilisant la filière décrite ci-dessus.

Le cas échéant, le fait que le tuyau soit extrudé en une seule pièce concerne bien entendu la partie du tuyau dans laquelle a été incorporé un ou plusieurs fils métalliques. Ainsi, par exemple, un tuyau multicouche obtenu en coextrudant une couche de finition de matière plastique autour d'un tuyau muni d'un fil métallique tel que défini ci-dessus répond à la définition de "tuyau extrudé en une seule pièce". De même, un tuyau muni d'un fil métallique et renforcé par une ou plusieurs bandes de renforcement, par exemple constituées de fibres de verre continues enrobées d'une matière thermoplastique, enroulées hélicoïdalement autour de lui, répond également à cette définition.

Lesdits tuyaux peuvent par ailleurs comporter des rainures internes, droites ou en hélices alternées, sans que cela n'affecte davantage la conformité à cette définition.

Il en va de même lorsque les tuyaux comportent en surface des bandes coextrudées de couleurs différentes destinées à faciliter le repérage des fils. L'invention s'étend également aux assemblages comportant plusieurs

tuyaux relevés entre eux par un ou plusieurs voiles thermoplastiques et comprenant au sein de leur paroi un ou plusieurs fils métalliques, conformément à ce qui a été exposé précédemment.

L'invention est illustrée de manière non-limitative par les variantes d'exécution représentées sur les figures annexées.

### Description des figures

La figure 1 représente une vue schématique de face d'une filière selon l'invention pourvue de deux canaux latéraux diamétralement opposés, permettant l'introduction de 2 fils métalliques.
La figure 2 est une représentation en coupe selon A-A', c'est-à-dire selon le rayon A pour la partie de gauche et selon le rayon A' pour la partie de droite, de la filière représentée à la figure 1. Elle illustre la forme générale de l'espace intérieur de la filière, en particulier au niveau d'un des canaux d'introduction du fil (à droite).
La figure 3 représente en détail la façon dont est conçu l'une des canaux latéraux d'introduction du fil.
La figure 4 représente une coupe selon C-C dans la figure 3.
La figure 5 est une vue en coupe selon B-B au niveau du ressaut dans lequel l'un des canaux latéraux débouche dans l'espace intérieur de la filière.
La figure 6 est une coupe longitudinale à travers une filière conforme à l'invention, munie d'un canal latéral pour l'introduction d'un fil métallique.

Des repères de références identiques sont utilisés dans les différentes figures pour identifier des éléments identiques ou similaires.

La filière, représentée par le repère général 1, comporte une cavité intérieure de section circulaire, d'axe général 10, comprenant un tronçon d'amont 3 (dans le sens d'écoulement de la matière plastique) de diamètre D1, un tronçon divergent 5 et un tronçon d'aval 7, de diamètre constant D2. Cette cavité intérieure contient en outre un noyau 14, qui lui est coaxial, présentant une symétrie de révolution et définissant un espace intérieur de la filière ayant une forme annulaire.

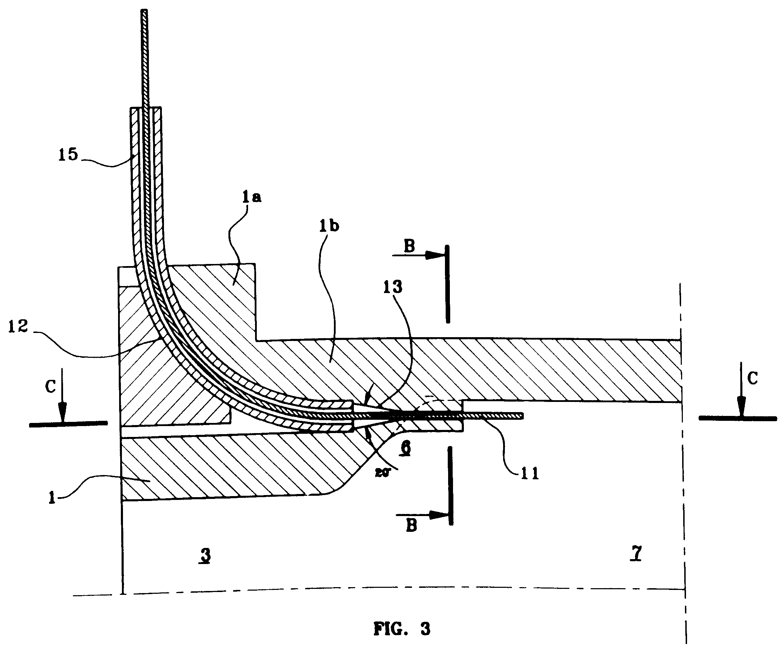

Pour des raisons de clarté, le noyau 14 n'a pas été représenté sur les Figures 1 à 5.

Le demi-angle moyen α d'ouverture de tronçon divergent 5, qui présente ici une forme tronconique, est de l'ordre de 45°. Le raccordement du tronçon divergent 5 aux tronçons adjacents de diamètre D1 et D2 de l'espace intérieur de la filière est réalisé en évitant les arêtes vives, de manière à perturber le moins possible le flux de la matière plastique.

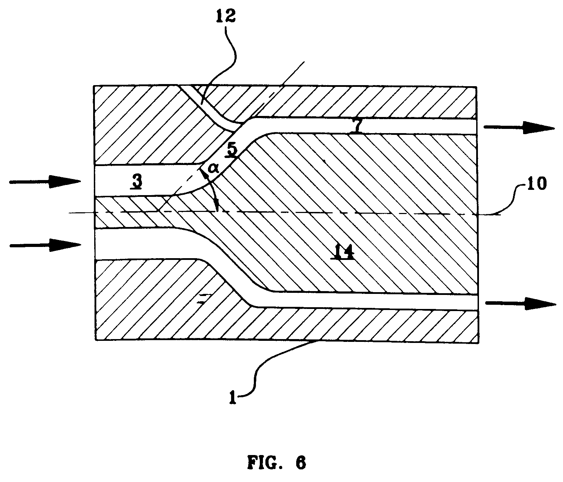

Dans la variante représentée à la Figure 6, un seul canal latéral 12 est prévu pour l'introduction d'un fil métallique dans l'espace intérieur de la filière.

Dans la forme d'exécution représentée à la Figure 1, on a prévu deux canaux latéraux 12 et 12' pour l'introduction de 2 fils métalliques, diamétralement opposés.

On notera que le diamètre extérieur de la partie 1a de la filière 1 est supérieur à celui de la partie 1b, ce qui permet de loger les canaux latéraux d'introduction des fils en assurant la résistance mécanique de la filière.

Selon la variante représentée aux figures 1 à 5, au niveau où chaque canal latéral 12 ou 12' débouche à proximité de l'extrémité du tronçon divergent 5 de l'espace intérieur de la filière 1, un ressaut 9 ou 9' aux formes extérieures hydrodynamiques est prévu à la surface extérieure de l'espace intérieur de la filière, à l'endroit où le tronçon divergent 5 se raccorde au tronçon d'aval 7, de géométrie constante.

Afin que chaque fil 11 soit introduit régulièrement et aisément dans l'espace intérieur de la filière 1, le canal latéral correspondant 12, 12' comporte avantageusement un tube de guidage curviligne 15 en acier inoxydable, de rayon de courbure élevé, qui permet la circulation du fil 11 en évitant son blocage par frottement. Le tube 15 communique avec un alésage 13 dans le ressaut 9, cet alésage étant agencé de manière à ce que le fil 11 pénètre dans le flux de la matière plastique (non représentée) à une profondeur de l'ordre de 2 mm, juste avant que l'écoulement ne se stabilise dans le tronçon d'aval 7, de géométrie constante, et ceci de manière sensiblement parallèle à l'axe général 10 de la filière.

Le tuyau obtenu à la sortie de la filière d'extrusion est ensuite calibré et enroulé sur une bobine (étapes non représentées). On procède à l'enroulement sur une bobine dont l'axe est parallèle au diamètre du tuyau défini par les deux fils, de façon à éviter que l'un des fils soit tendu et l'autre comprimé lors de l'enroulement sur la bobine.

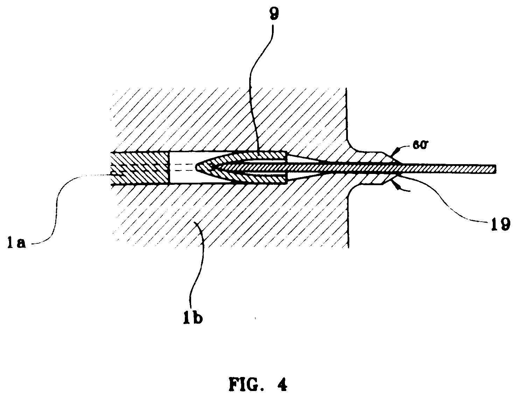

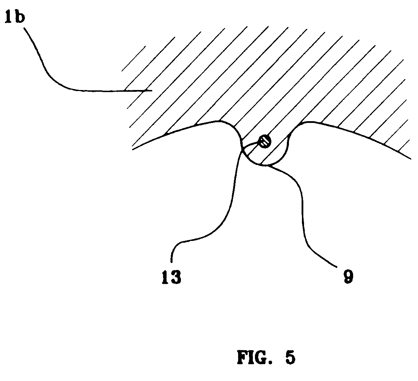

Comme représenté à la figure 5, en coupe transversale (perpendiculairement à l'axe du tuyau), le ressaut 9 est de forme arrondie et ne présente aucune arête vive. Chaque canal latéral 12, 12' est curviligne et intérieurement gainé d'un tube de guidage 15 en acier inoxydable, raccordé à un alésage 13 (convergent dans le sens de déplacement du fil 11) pratiqué dans le ressaut 9 de la paroi de l'espace intérieur de la filière 1. Le ressaut 9 comporte dans le sens axial une partie pointue 19 à son extrémité, afin de positionner avec précision le fil dans la paroi du tuyau (voir Figure 4).

Le tube de guidage 15 présente bien entendu un diamètre intérieur adapté à la dimension du fil 11 qu'il est destiné à guider, de même que l'alésage 13.

## Revendications

1. Procédé de fabrication d'un profilé à base de matière plastique comportant dans sa paroi au moins un fil métallique continu (11), dans lequel on extrude la matière plastique à travers une filière (1) comportant un tronçon divergent (5), et on introduit le fil métallique (11) par un canal latéral (12, 12') débouchant dans l'espace intérieur de la filière, caractérisé
en ce qu'on applique le procédé à la fabrication d'un tuyau,
en ce qu'on utilise une filière (1) qui comporte un tronçon de géométrie constante (7), consécutif au tronçon divergent (5), disposé dans l'axe de celui-ci, s'étendant jusqu'à la sortie de la filière, et dont
le canal latéral (12, 12') débouche dans l'espace intérieur de la filière à proximité de l'extrémité la plus large du tronçon divergent (5), de façon à ce que le fil s'insère précisément dans la paroi du tuyau en cours d'extrusion et soit entraîné avec lui.

2. Procédé selon la revendication 1, caractérisé en outre en ce qu'il est appliqué à la fabrication d'un tuyau rigide.

3. Procédé selon l'une quelconque des revendications 1 ou 2, dans lequel au moins deux fils métalliques (11) sont amenés par des canaux latéraux individuels (12, 12') débouchant dans l'espace intérieur de la filière (1).

4. Procédé selon l'une quelconque des revendications 1 à 3, dans lequel le canal latéral (12) est configuré de manière à déboucher dans l'espace intérieur de la filière (1) sensiblement parallèlement à l'axe (10) de la filière (1).

5. Procédé selon l'une quelconque des revendication 1 à 4, dans lequel le canal latéral (12) est curviligne.

6. Filière (1) pour la fabrication d'un profilé à base de matière plastique comportant dans sa paroi au moins un fil métallique continu (11), comprenant un tronçon divergent (5) ainsi qu'au moins un canal latéral (12, 12') débouchant dans l'espace intérieur de la filière, destiné à y introduire le fil métallique (11), caractérisé
en ce que la filière (1) est adaptée à fabriquer un tuyau,
en ce que la filière (1) comporte un tronçon de géométrie constante (7), consécutif au tronçon divergent (5), disposé dans l'axe de celui-ci, s'étendant jusqu'à la sortie de la filière, et
en ce que le canal latéral (12, 12') débouche dans l'espace intérieur de la filière à proximité de l'extrémité la plus large du tronçon divergent (5).

7. Filière selon la revendication 6, dans laquelle le tronçon divergent (5) comprend essentiellement une zone dont l'angle de demi-ouverture par rapport à l'axe de la filière est compris entre 35 et 55°.

8. Filière selon l'une quelconque des revendications 6 ou 7, comprenant au moins deux canaux latéraux individuels (12, 12') pour l'introduction d'au moins deux fils métalliques (11).

9. Filière selon l'une quelconque des revendications 6 à 8, dans laquelle le canal latéral (12) débouche dans un ressaut (9) de la surface extérieure de l'espace intérieur de la filière disposé de manière à ne pas perturber de manière importante le flux de matière plastique dans la filière.

10. Filière selon l'une quelconque des revendication 6 à 9, dans laquelle le canal latéral (12) débouche dans l'espace intérieur de la filière sensiblement parallèlement à son axe (10).

11. Filière selon l'une quelconque des revendication 6 à 10, dans laquelle le canal latéral (12) est curviligne.

12. Filière selon l'une quelconque des revendication 6 à 11, dans laquelle le canal latéral (12) est gainé intérieurement, sur au moins une partie de sa longueur, d'un tube de guidage (15) de faible coefficient de frottement.

## Claims

1. Method for producing a plastic-based profile comprising at least one continuous metal wire (11) in its wall, in which method the plastic is extruded through a die (1) comprising a divergent portion (5), and the metal wire (11) is introduced via a lateral duct (12, 12') opening into the internal space of the die, characterized in that the method is applied to producing a pipe, and in that a die (1) is used, which comprises a portion of constant geometry (7) following the divergent portion (5), arranged in the axis of the latter and extending as far as the outlet of the die, and the lateral duct (12, 12') of which opens into the internal space of the die in the vicinity of the widest end of the divergent portion (5), in such a way that the wire is inserted exactly into the wall of the pipe during extrusion and is carried along with the latter.

2. Method according to Claim 1, characterized, furthermore, in that it is applied to producing a rigid pipe.

3. Method according to either one of Claims 1 or 2, wherein at least two metal wires (11) are delivered via individual lateral ducts (12, 12') opening into the internal space of the die (1).

4. Method according to any one of Claims 1 to 3, wherein the lateral duct (12) is configured in such a way as to open into the internal space of the die (1) substantially in parallel with the axis (10) of the die (1).

5. Method according to any one of Claims 1 to 4, wherein the lateral duct (12) is curved.

6. Die (1) for producing a plastic-based profile comprising at least one continuous metal wire (11) in its wall, the said die comprising a divergent portion (5) and at least one lateral duct (12, 12') opening into the internal space of the die and intended for introducing the metal wire (11) therein, characterized in that the die (1) is designed for producing a pipe, in that the die (1) comprises a portion of constant geometry (7) following the divergent portion (5), arranged in the axis of the latter and extending as far as the outlet of the die, and in that the lateral duct (12, 12') opens into the internal space of the die in the vicinity of the widest end of the divergent portion (5).

7. Die according to Claim 6, wherein the divergent portion (5) comprises essentially a zone of which the half-opening angle relative to the axis of the die is between 35 and 55°.

8. Die according to either one of Claims 6 or 7, comprising at least two individual lateral ducts (12, 12') for introducing at least two metal wires (11).

9. Die according to any one of Claims 6 to 8, wherein the lateral duct (12) opens into a projection (9) of the outer surface of the internal space of the die, the said projection being arranged so as not to disturb appreciably the flow of plastic in the die.

10. Die according to any one of Claims 6 to 9, wherein the lateral duct (12) opens into the internal space of the die substantially in parallel with the axis (10) of the latter.

11. Die according to any one of Claims 6 to 10, wherein the lateral duct (12) is curved.

12. Die according to any one of Claims 6 to 11, wherein the lateral duct (12) is lined internally, over at least some of its length, with a guide tube (15) having a low coefficient of friction.

## Patentansprüche

1. Herstellungsverfahren eines Profils aus Kunststoff, das in seiner Wand mindestens einen fortlaufenden Metallfaden (11) enthält, in welchen der Kunststoff durch eine Düse (1) mit einem divergenten Abschnitt (5) extrudiert wird, und der Metallfaden (11) durch einen seitlichen in den Innenraum der Düse mündenden Kanal (12, 12') geführt wird, dadurch gekennzeichnet, daß das Verfahren auf die Herstellung eines Rohres angewendet wird, daß eine Düse (1) verwendet wird, die einen Abschnitt (7) mit konstanter Geometrie aufweist, der einem divergenten Abschnitt (5) folgt und in dessen Achse liegt, die sich bis zum Ausgang der Düse erstreckt und wobei der seitliche Kanal (12, 12') in den Innenraum der Düse nahe dem breitesten Ende des divergenten Abschnitts (5) mündet, so daß der Faden in der Rohrwand während der Extrusion exakt einfügt und mitgezogen wird.

2. Verfahren nach Anspruch 1, dadurch gekennzeichnet, daß es darüber hinaus für die Herstellung eines starren Rohres angewendet wird.

3. Verfahren nach einem der Ansprüche 1 oder 2, in dem zumindestens zwei Metallfäden (11) durch seitliche, individuelle Kanäle (12, 12'), die in den Innenraum der Düse (1) münden, geführt werden.

4. Verfahren nach einem der Ansprüche 1 bis 3, in dem der seitliche Kanal (12) derart konfiguriert ist, daß er in den Innenraum der Düse (1) annähernd parallel zur Achse (10) der Düse (1) mündet.

5. Verfahren nach einem der Ansprüche 1 bis 4, in dem der seitliche Kanal (12) krummlinig ist.

6. Düse (1) für die Herstellung eines aus Kunststoff bestehenden Profils, das in seiner Wand zumindestens einen fortlaufenden Metallfaden (11) umfaßt und einen divergenten Abschnitt (5) sowie zumindest einen seitlichen Kanal (12, 12') aufweist, der in den Innenraum der Düse mündet und dazu dient, dort den Metallfaden (11) einzuführen, dadurch gekennzeichnet, daß die Düse (1) zur Herstellung eines Rohrs (5) geeignet ist, wobei die Düse (1) einen Abschnitt (7) mit konstanter Geometrie vorsieht, der dem divergenten Abschnitt (5) folgt und in dessen Achse verläuft, die sich bis zum Ausgang der Düse erstreckt, und wobei der seitliche Kanal (12, 12') in den Innenraum der Düse nahe bei dem breitesten Ende des divergenten Abschnitts (5) mündet.

7. Düse nach Anspruch 6, in der ein divergenter Abschnitt (5) im wesentlichen eine Zone, deren halbgeöffneter Schenkel im Verhältnis zu der Achse der Düse zwischen 35 und 55° aufweist.

8. Düse nach einem der Ansprüche 6 oder 7, die zumindest zwei seitliche, individuelle Kanäle (12, 12') für die Einführung zumindest zweier Metallfäden (11) aufweist.

9. Düse nach einem der Ansprüche 6 bis 8, in der der seitliche Kanal (12) in einen Vorsprung (9) auf der äußeren Fläche des Innenraums der Düse mündet, der so angebracht ist, daß der Fluß des Kunststoffes in der Düse nicht erheblich gestört wird.

10. Düse nach einem der Ansprüche 6 bis 9, in der der seitliche Kanal (12) in den Innenraum der Düse annähernd parallel zu seiner Achse (10) mündet.

11. Düse nach einem der Ansprüche 6 bis 10, in der der seitliche Kanal (12) krummlinig ist.

12. Düse nach einem der Ansprüche 6 bis 11, in der der seitliche Kanal (12) über zumindest einen Teil seiner Länge mit einem Lenktubus (15) mit schwachem Reibungskoeffizienten innen bespannt ist.
